# EUROPEAN PATENT SPECIFICATION

(11) **EP 3 428 015 B1**
(45) Date of publication and mention of the grant of the patent: **26.02.2020**
(21) Application number: 18000491.3
(22) Date of filing: 01.06.2018
(51) Int. Cl.: B60R 9/06, B60R 9/10

(54) **DEVICE FOR TRANSPORTING A LOAD ON MOTOR VEHICLES EQUIPPED WITH ADJUSTABLE LOAD SUPPORTS**
VORRICHTUNG ZUM TRANSPORT EINER LAST AN KRAFTFAHRZEUGEN MIT VERSTELLBAREN LASTTRÄGERN
DISPOSITIF POUR TRANSPORTER UN CHARGEMENT SUR DES VÉHICULES AUTOMOBILES ÉQUIPÉS DE SUPPORTS DE CHARGE RÉGLABLES

(30) Priority: 10.07.2017 IT 201700077201
(43) Date of publication of application: 16.01.2019
(73) Proprietor: Aurilis Group Italia S.R.L., 12045 Fossano (CN) (IT)
(72) Inventor: Gemesio, Matteo, I-12045 Fossano (CN) (IT)
(74) Representative: Garavelli, Paolo

(56) References cited:
- EP-A1- 2 080 671
- EP-A2- 1 995 119
- EP-A2- 2 014 510

## Description

The present invention refers to a device for transporting a load on motor vehicles, for example for transporting bicycles or skis, equipped with adjustable load supports. In particular, the invention refers to a device adapted to be assembled projecting on the rear part of a motor vehicle, fastened to a tow hook connected to the motor vehicle.

Devices are known for transporting a load on motor vehicles, capable of being connected projecting to a tow hook, in particular adapted to be assembled on the rear part of a car.

These devices however are not satisfactory and have the problem of not allowing to optimize the fastening of flanked loads with wide widths to optimally exploit the available space, because the load supports are fastened to the device for transporting the load at pre-set distances, which cannot take into account the different widths of the loads which must be fastened thereto.

For example, if bicycles have to be loaded on the device, the distances between the supports cannot be useful to best exploit the space available when different types of bikes are loaded, such as Downhill bikes, which have much greater widths of frame, handlebar, forks and carts with respect to racing bikes, or to children bicycles, which have reduced sizes, and therefore the distance between due bicycles assembled flanked on the device will be either excessive, with a waste of space, or reduced, causing loading difficulties or making it necessary to leave empty supports between two bicycles.

EP-A2-1995119, EP-A2-2014510 and EP-A1-2080671 disclose devices as in the preamble of Claim 1.

Object of the present invention is solving the above prior art problems, by providing a device for transporting a load on motor vehicles equipped with adjustable load supports, of the type capable of being connected projecting to a tow hook and adapted to be assembled on the rear part of a car, which allows optimizing the exploitation of the available space when mutually flanked loads having different widths are fastened to the device.

The above and other objects and advantages of the invention, as will appear from the following description, are obtained with a device for transporting a load on motor vehicles equipped with adjustable load supports as claimed in claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention as appears from the enclosed claims.

The present invention will be better described by some preferred embodiments thereof, provided as a non-limiting example, with reference to the enclosed drawings, in which:
- Figure 1 shows a perspective view of a first embodiment of the device for transporting a load on motor vehicles that does not correspond to the present invention;
- Figure 2 shows a side view of the first embodiment of the device for transporting a load on motor vehicles that does not correspond to the present invention;
- Figure 3 shows a perspective view of a second embodiment of the device for transporting a load on motor vehicles according to the present invention; and
- Figure 4 shows a side view of a second embodiment of the device for transporting a load on motor vehicles according to the present invention.

With reference to the Figures, the device 10 for transporting a load on motor vehicles equipped with adjustable load supports of the invention comprises a connecting element 11 to a tow hook installed on a motor vehicle, a frame 12 connected to the connecting element 11 and fastening devices 16 assembled sliding on the frame 12, on which the load is adapted to be fastened; preferably, the fastening devices 16 are assembled sliding on guiding means 27.

Preferably, the fastening devices 16 comprise load supports 18, connected sliding by means of the guiding means 27 to the frame 12 in order to be adjustable to be suited to loads having diferent widths, allowing to load them flanked onto the frame 12.

In the embodiment of the device 10 adapted to transport bicycles, the load supports 18 comprise wheel supports with a channel 19 adapted to contain the wheel of a bicycle, and the position of the wheel supports is adjustable to adapt the axle ratio of the wheel supports depending on the sizes, preferably the width of the loaded bicycles; in a preferred way, the fastening devices 16 further comprise straps to block the bicycle wheel on the channel.

Preferably, the device 10 for transporting a load on motor vehicles of the invention further comprises blocking elements 21 associated with the fastening devices 16 and the frame 12 and adapted to block the translation of the fastening devices 16 with respect to the frame 12 once they are placed in the desired position, which allows fastening the loads, for example the bicycles, flanked in an optimum position on the frame 12, mutually approaching or moving away the fastening devices 16, making them slide on the guiding means 27.

Preferably, the guiding means 27 are made on at least one arm 22 of the frame 12, and the fastening devices 16 are sliding on the guiding means 27 in the direction of the arm 22 on which they are assembled, in order to approach or move away from the tow hook.

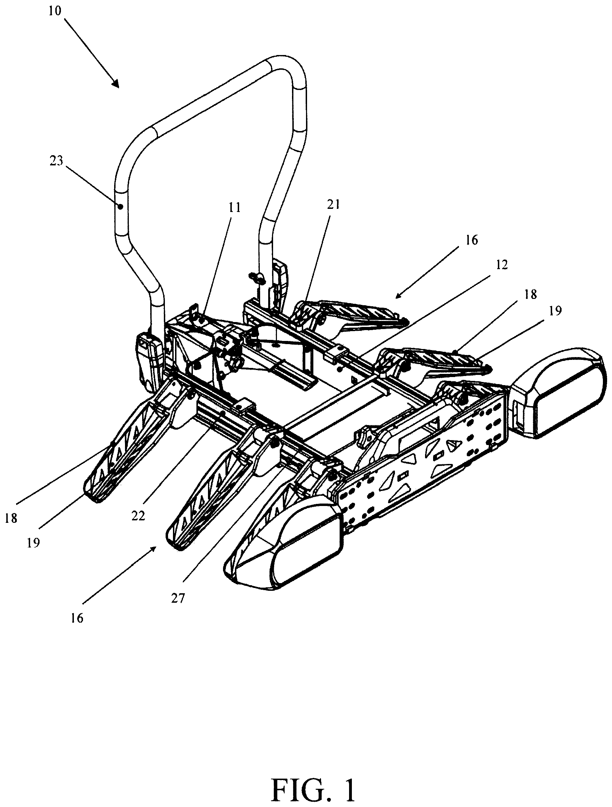

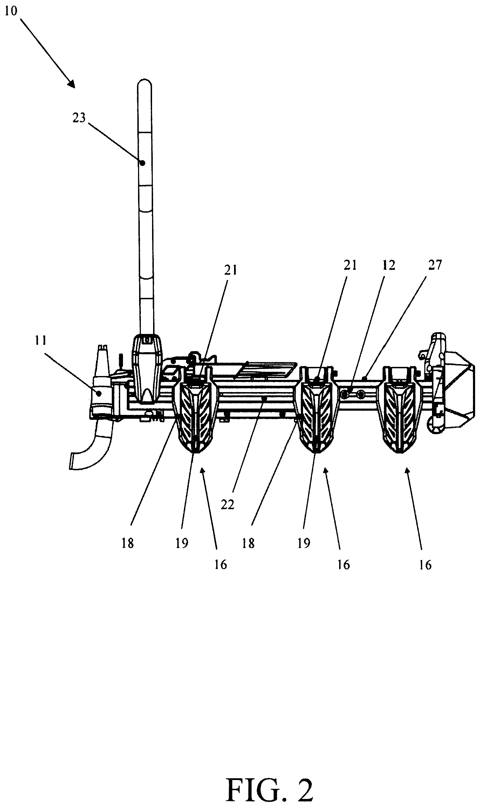

In a first embodiment that does not correspond to the invention and that is shown in Figures 1 and 2, of a device adapted to transport bicycles, the fastening devices 16, in addition to be assembled sliding on the guiding means 27, are connected rotatable to the frame 12, for example hinged to the guiding means 27, to be adapted to the type of load, in particular the sizes of the wheels of the bicycle.

Preferably, the fastening devices 16 are assembled rotatable with respect to at least one arm 22 of the frame 12.

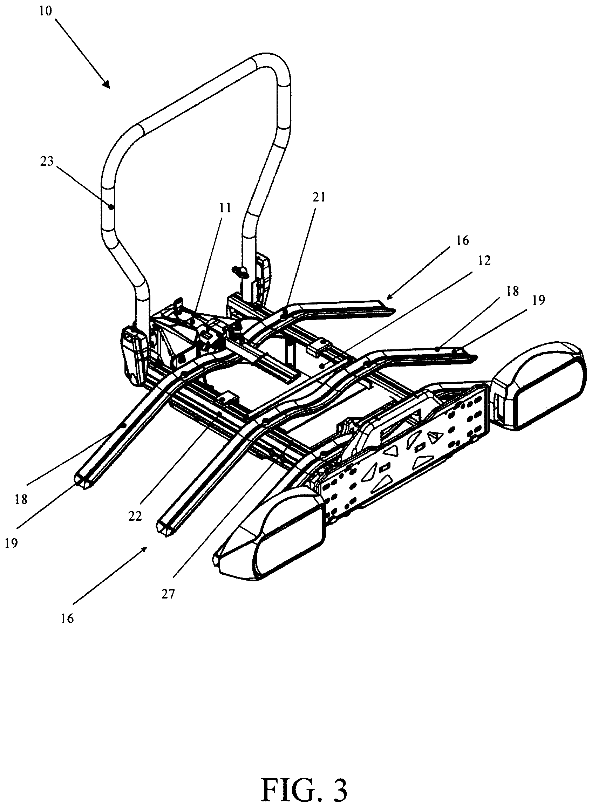

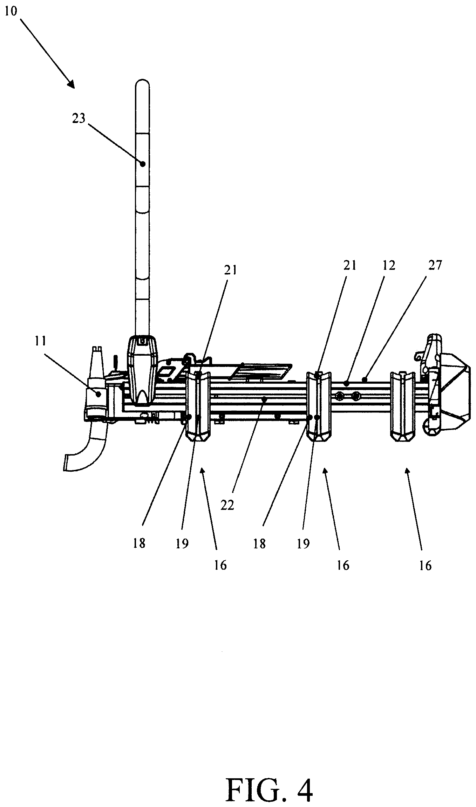

In a second embodiment of the device 10 for transporting a load according to the invention, shown in Figures 3 and 4, adapted to transport bicycles, the fastening devices 16 are assembled sliding each on guiding means 27 made on two arms 22 of the frame 12; a single fastening device 16 is then connected sliding to two arms 22 of the frame 12, and is adapted to slide along the direction of the arm 22.

In a preferred way, the blocking elements 21 are adapted to block the fastening devices 16 in the position adapted to assemble at least two loads, for example two bicycles, each connected to at least one fastening device 16 and flanked at the desired distance, once the position of the fastening devices 16 has been adjusted, by making them slide on the guiding means 27 with respect to the two arms 22 of the frame 12; the blocking elements 21 are then adapted to prevent the translation of the fastening devices 16 and of the load fastened thereto during the transport.

For example, the blocking elements 21 are composed, in a known way, of a screw with small threaded plate engaged in a channel of the guiding means 27, or of a knob or cam of a known type, or of an automatic blocking system which allows blocking the position of the channels together with the tensioning of the strap or belt which blocks the bicycle wheel.

Preferably, the device 10 for transporting a load on motor vehicles of the invention further comprises a tube 23, preferably vertical, adapted to be used to block the load, for example a bicycle, by connecting the load to the tube 23 through a blocking device, for example equipped with clamps.

In the operation of the device 10 for transporting a load on motor vehicles according to the present invention, the position of the fastening devices 16 is adjusted by making them slide on the guiding means 27 of the frame 12, in order to adjust the distance between at least two loads, for example two bicycles, to assemble them flanked at the desired distance.

When the fastening devices 16 are in the desired position, they are blocked by fastening the blocking elements 21.

Advantageously, the device 10 for transporting a load on motor vehicles of the invention allows optimizing the exploitation of the space available when mutually flanked loads having different widths are fastened to the device.

In particular, in the embodiment of the device for transporting a load which is made for transporting bicycles, the device 10 according to the invention allows transporting bicycles having different widths, such as for example Downhill, racing or children bicycles, loading them on the device flanked at an optimum distance, enabling the loading/unloading operations and allowing to optimally exploit the loading space available on the device 10.

## Claims

1. Device (10) for transporting a load on motor vehicles comprising a connecting element (11) to a tow hook installed on a motor vehicle, a frame (12) connected to the connecting element (11) and fastening devices (16) on which the load is adapted to be fastened, said fastening devices (16) being assembled sliding on the frame (12), the fastening devices (16) being assembled sliding on guiding means (27), **characterized in that** the fastening devices (16) are assembled sliding each on guiding means (27) made on two arms (22) of the frame (12), so that a single fastening device (16) is connected sliding to two arms (22) of the frame (12), and is adapted to slide along the direction of the arm (22) .

2. Device (10) for transporting a load on motor vehicles according to claim 1, **characterized in that** it further comprises blocking elements (21) associated with the fastening devices (16) and the frame (12) and adapted to block a translation of the fastening devices (16) with respect to the frame (12) once they are placed in the desired position which allows fastening the flanked loads.

3. Device (10) for transporting a load on motor vehicles according to claim 1, **characterized in that** the fastening devices (16) comprise load supports (18) connected sliding by means of the guiding means (27) to the frame (12) in order to be adjustable to be suited to loads having different widths.

4. Device (10) for transporting a load on motor vehicles according to claim 3, **characterized in that** the load supports (18) comprise wheel supports comprising a channel (19) adapted to contain the wheel of a bicycle, and the position of the wheel supports is adjustable to suit the axle ration of the wheel supports depending on the sizes of the loaded bicycles.

5. Device (10) for transporting a load on motor vehicles according to any one of claims 1, 3 or 4, **characterized in that** the guiding means (27) are made on each arm (22) of the frame (12), and the fastening devices (16) are sliding on the guiding means (27) along the direction of the arm (22) on which they are assembled.

6. Device (10) for transporting a load on motor vehicles according to any one of the previous claims, **characterized in that** it further comprises a tube (23) adapted to be used for blocking the load by connecting it to the tube (23) through a blocking device.

## Patentansprüche

1. Vorrichtung (10) für den Transport einer Last auf Fahrzeugen, die ein Verbindungselement (11) an einem Zughaken enthält, der an einem Fahrzeug installiert ist, einen Rahmen (12), der mit dem Verbindungselement (11) verbunden ist, und Befestigungsvorrichtungen (16), an denen die Last befestigt werden muss, die genannten Befestigungsvorrichtungen (16) sind gleitend am Rahmen (12) montiert, die **dadurch gekennzeichnet ist, dass** die Befestigungsvorrichtungen (16) jeweils gleitend auf Führungsvorrichtungen (27) montiert sind, die an zwei Armen (22) des Rahmens (12) realisiert wurden, sodass eine einzige Befestigungsvorrichtung (16) gleitend mit den zwei Armen (22) des Rahmens (12) verbunden ist, die dazu dient, in Richtung des Arms (22)zu gleiten.

2. Vorrichtung (10) für den Transport einer Last auf Fahrzeugen gemäß Patentanspruch 1, die **dadurch gekennzeichnet ist, dass** sie außerdem Blockierelemente (21) enthält, die den Befestigungsvorrichtungen (16) und dem Rahmen (12) zugeordnet wurden, und die dazu dienen, die Verschiebung der Befestigungsvorrichtungen (16) gegenüber dem Rahmen (12) zu blockieren, nachdem sie in der gewünschten Position angebracht wurden, die es ermöglicht, die daneben befindlichen Lasten zu befestigen.

3. Vorrichtung (10) für den Transport einer Last auf Fahrzeugen gemäß Patentanspruch 1, die **dadurch gekennzeichnet ist, dass** die Befestigungsvorrichtungen (16) Lasthalterungen (18) enthalten, die gleitend durch die Führungsvorrichtungen (27) mit dem Rahmen (12) verbunden sind, sodass sie eingestellt werden können, damit sie sich an Lasten mit unterschiedlichen Breiten anpassen können.

4. Vorrichtung (10) für den Transport einer Last auf Fahrzeugen gemäß Patentanspruch 3, die **dadurch gekennzeichnet ist, dass** die Lasthalterungen (18) Radhalterungen enthalten, die einen Kanal (19) enthalten, der dazu dient, das Rad eines Fahrrads zu enthalten, und dass die Position der Radhalterungen verstellbar ist, um den Achsabstand der Radhalterungen an die Größe der geladenen Fahrräder anzupassen.

5. Vorrichtung (10) für den Transport einer Last auf Fahrzeugen gemäß einem beliebigen der Patentansprüche 1, 3 oder 4, die **dadurch gekennzeichnet ist, dass** die Führungsvorrichtungen (27) an jedem Arm (22) des Rahmens (12) realisiert wurden, und dass die Befestigungsvorrichtungen (16) auf den Führungsvorrichtungen (27) in Richtung des Arms (22) gleiten, auf dem sie montiert sind.

6. Vorrichtung (10) für den Transport einer Last auf Fahrzeugen gemäß einem beliebigen der vorhergehenden Patentansprüche, die **dadurch gekennzeichnet ist, dass** sie außerdem ein Rohr (23) enthält, das dazu dient, verwendet zu werden, um die Last zu blockieren und sie mit diesem durch eine Blockiervorrichtung zu verbinden.

## Revendications

1. Dispositif (10) pour le transport d'une charge sur des véhicules comprenant un élément de connexion (11) à un crochet d'attelage installé sur un véhicule, un châssis (12) relié à l'élément de connexion (11) et des dispositifs de fixation (16) sur lesquels la charge peut être fixée ; ces dispositifs de fixation (16) coulissent sur un châssis (12) ; **caractérisé en ce que** les dispositifs de fixation (16) coulissent chacun sur des moyens de guidage (27) réalisés sur deux bras (22) du châssis (12), de sorte qu'un seul dispositif de fixation (16) soit relié et glisse sur les deux bras (22) du châssis (12), et qu'il puisse coulisser dans la direction du bras (22).

2. Dispositif (10) pour le transport d'une charge sur des véhicules, selon la revendication 1, **caractérisé en ce qu'**il comprend en outre des éléments de blocage (21) associés aux dispositifs de fixation (16) et au châssis (12) qui sont aptes à bloquer la translation des dispositifs de fixation (16) par rapport au châssis (12) dès qu'ils sont placés dans la position voulue permettant de fixer les charges juxtaposées.

3. Dispositif (10) pour le transport d'une charge sur des véhicules, selon la revendication 1, **caractérisé en ce que** les dispositifs de fixation (16) comprennent des supports de la charge (18) reliés au châssis (12) par des moyens de guidage (27) de sorte à pouvoir les régler pour les adapter aux charges ayant des largeurs différentes.

4. Dispositif (10) pour le transport d'une charge sur des véhicules, selon la revendication 3, **caractérisé en ce que** les supports de la charge (18) comprennent des supports de roue dotés d'une rainure (19) apte à contenir la roue d'une bicyclette ; par ailleurs, la position des supports de roue peut être réglée pour adapter l'entraxe des supports de roue en fonction de la taille des bicyclettes chargées.

5. Dispositif (10) pour le transport d'une charge sur des véhicules, selon l'une des revendications 1, 3 ou 4, **caractérisé en ce que** les moyens de guidage (27) sont réalisés sur chaque bras (22) du châssis (12), et les dispositifs de fixation (16) coulissent sur les moyens de guidage (27) dans la direction du bras (22) sur lequel ils sont montés.

6. Dispositif (10) pour le transport d'une charge sur des véhicules, selon l'une des revendications précédentes, **caractérisé en ce qu'**il comprend en outre un tube (23) apte à être utilisé pour bloquer la charge en le reliant à cette dernière à travers un dispositif de blocage.
